Europäisches Patentamt

European Patent Office

Office européen des brevets

(11) Veröffentlichungsnummer: **0 688 927 A2**

# EUROPÄISCHE PATENTANMELDUNG

(21) Anmeldenummer: **95108311.2**

(51) Int. Cl.⁶: **E05B 49/00**

(22) Anmeldetag: **30.05.95**

(30) Priorität: **20.06.94 DE 4421526**

(43) Veröffentlichungstag der Anmeldung:
**27.12.95 Patentblatt 95/52**

(84) Benannte Vertragsstaaten:
**AT DE ES FR GB IT**

(71) Anmelder: **SIEMENS AKTIENGESELLSCHAFT**
**Wittelsbacherplatz 2**
**D-80333 München (DE)**

(72) Erfinder: **Feldtkeller, Martin, Dipl.-Ing.**
**Ouagliostr. 14**
**D-81543 München (DE)**

(54) **Elektronische berührungsloses Datenübertragungssystem**

(57) Elektronisches Schlüssel-Schloß-System mit einer induktiven Kopplung zur gemeinsamen Daten- und Energieübertragung, wobei die Datenübertragung vom Schlüssel zum Schloß über ein Basisband und wenigstens ein redundante Informationen enthaltendes Seitenband erfolgt.

FIG 1

Die Erfindung betrifft ein elektronisches berührungsloses Datenübertragungssystem, insbesondere einem Schlüssel-Schloß-System für eine elektronische Wegfahrsperre im KFZ-Bereich, gemäß dem Oberbegriff des Anspruchs 1.

Bei einem elektronischen berührungslosen Datenübertragungssystem, insbesondere einem Schlüssel-Schloß-System für die Verwendungen bei elektronischen Wegfahrsperren im KFZ-Bereich, werden Daten induktiv vom Schloß zum Schlüssel und zurück übertragen. Außerdem wird der Schlüssel ebenso auf induktivem Weg durch das Schloß mit Energie versorgt. Die Daten-Rückübertragung vom Schlüssel zum Schloß erfolgt dabei auf relativ niedrigem Energielevel, so daß die Übertragung leicht durch eingestrahlte elektromagnetische Felder gestört werden kann. Ein elektronisches Identifizierungssystem mit induktiver Übertragung von Daten und Energie ist in der deutschen Offenlegungsschrift DE 39 21 893 beschrieben.

Um die Störanfälligkeit zu vermindern, wird bei einer induktiven Übertragung vorzugsweise mit einer Bi-Phase-Kodierung mit Amplitudenmodulation oder Phasenmodulation und schmalbandiger Filterung vor der Auswertung gearbeitet. Die Datenübertragung kann jedoch durch einen Träger im Bereich der Übertragungsträgerfrequenz ±2 mal der zu übertragenden Baudrate gestört werden.

In der US-Patentschrift 5 319 797 ist ein Datenübertragungssystem für ein Schlüssel-Schloß-System eines Kraftfahrzeugs beschrieben, bei dem zur Erhöhung der Sicherheit bei unberechtigtem Zugriff die Datenübertragung vom Schlüssel zum Schloß mittels eines festfrequenten und eines mit geringer Frequenzabweichung frequenzmodulierten Übertragungskanals ausgeführt wird.

Aufgabe der vorliegenden Erfindung ist es, ein Schlüssel-Schloß-System anzugeben, welches eine geringere Störanfälligkeit aufweist.

Diese Aufgabe wird durch den kennzeichnenden Teil des Anspruchs 1 gelöst. Weiterbildungen sind Kennzeichen der Unteransprüche.

Vorteil der vorliegenden Erfindung ist es, daß die Datenübertragung redundant in zwei verschiedenen Frequenzbereichen nämlich dem Basisband und den Seitenbändern erfolgt und die Empfängerseite diese Signale parallel auswertet. So lange einer der beiden Datenkanäle sinnvolle Daten liefert, was beispielsweise durch einen Redundanz-Check geprüft werden kann, ist die Datenübertragung sichergestellt. Ein schmalbandiger Störträger kann somit die Datenübertragung kaum stören. Ein derartiger Störträger müßte einen wesentliche höheren Pegel haben, um beide Datenkanäle gleichzeitig zu stören. Zur Übertragung können aus der Nachrichtenübertragungstechnik bekannte Anordnungen dienen, z.B. eine Anordnung, die Basisband und Seitenband erzeugt und Mittel aufweist, welche die beiden Signale analog aufaddiert und abstrahlt.

In einer bevorzugten Ausführungsform kann jedoch jedes zu übertragende Bit bereits so kodiert werden, daß sich bei der Modulation mit einer Trägerfrequenz zum Basisband je ein Seitenband ergibt. Vorteilhafterweise kann dadurch zusätzliche aufwendige Steuerungselektronik entfallen.

Die Erfindung wird nachfolgend anhand von vier Figuren näher erläutert. Es zeigen:

Figur 1    ein Prinzipblockschaltbild einer bevorzugten Ausführungsform einer Sendereinheit im Schlüssel,

Figur 2    vier Signalverläufe für den logischen Pegel 0 und 1,

Figur 3    eine spektrale Darstellung der Übertragungsbänder,

Figur 4    ein Prinzipblockschaltbild eines Empfängers im Schloß.

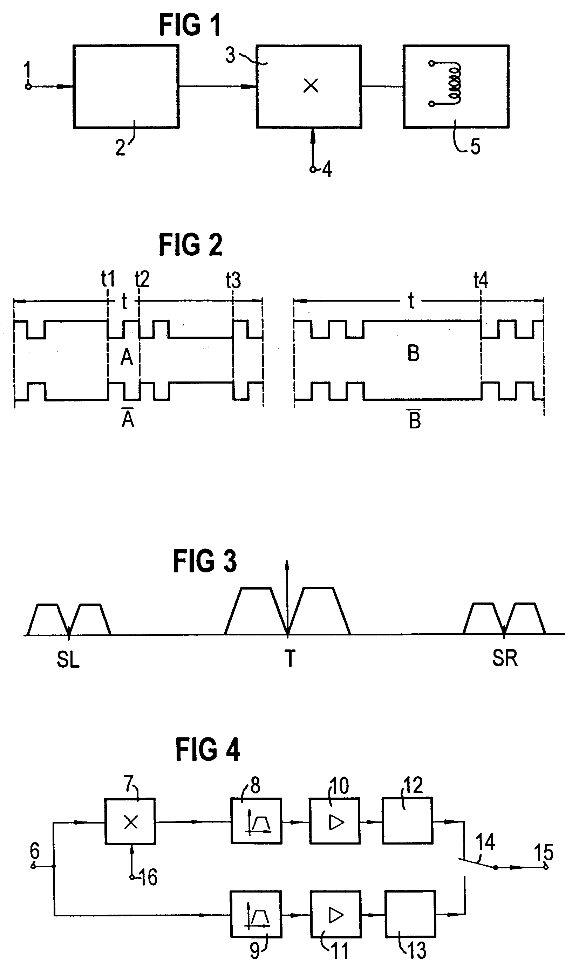

Mit 1 ist in Figur 1 eine Eingangsklemme bezeichnet, der ein zu übertragendes Datensignal zuführbar ist. Dieses Datensignal wird einer Einheit 2 zugeführt, welche ein Signal erzeugt, das sowohl die redundante Information des Basisbands wie auch die der Seitenbänder enthält. Mit 3 ist ein Modulator bezeichnet, der das von der Einheit 2 erzeugte Ausgangssignal moduliert. Über eine Klemme 4 wird der Modulator 3 beispielsweise eine Trägerfrequenz zugeführt. Der Ausgang des Modulators ist mit einer Sendeeinheit 5 verbunden, welche z.B. eine Übertragungsspule enthält.

In Figur 2 sind im oberen Teil zwei Signale A, B und darunter dazu invertierte Signale $\overline{A}$, $\overline{B}$ dargestellt, welche jeweils für einen logischen Zustand 0 oder 1 gelten. Es soll z.B. gelten, daß für eine digital zu übertragende 0 die Signalform A bzw. $\overline{A}$ und für eine digital zu übertragende 1 die Signalform B bzw. $\overline{B}$ gewählt wird. Im unteren Teil der Figur 2 sind jeweils die zu den Signalformen A, B invertierten Signalformen $\overline{A}$, $\overline{B}$ dargestellt.

Die einzelnen Signalformen sind nun so gewählt, daß eine getrennte Erzeugung der Signale für das Basisband bzw. das Seitenband entfällt. Bei Betrachtung der Signale A, B fällt auf, daß diese zum einen im üblichen Bi-Phase-Kodierungsverfahren kodiert sind und sogenannte hochfrequente Burst-Anteile überlagert aufweist. So weist das Signal A einen in der B-Phase-Kodierung üblichen Übergang von 1 auf 0 bzw. das Signal $\overline{A}$ einen Üergang von "0" auf "1" während der Periode t auf. Jeweils bei einem Übergang von logisch "1" auf logisch "0" bzw. umgekehrt ist ein hochfrequentes Wechselsignal überlagert, wobei die an den Null-Eins-Übergängen eingefügten Burstsignale gegenüber den an den Eins-Null-Übergängen eingeführten Burstsignalen in der Phasenlage invertiert sind. Dies gilt bei der gewählten Bi-Phase-Kodierung also grundsätzlich am Signalanfang und am Signalende, sowie bei einer logischen "0" zusätzlich in der Signalmitte. Dieses hochfrequente Wechselsignal weist bei einer logischen "0", Signalform A bzw. das Signal $\bar{A}$, zwei Phasensprünge an der Stelle $t_1$ und an der Stelle $t_3$ auf.

Das Signal B bzw. $\bar{B}$ entspricht einer digitalen 1. Dieses Signal ist ebenso aus zwei überlagerten Signalen aufgebaut, wobei ein Gleichanteil, entsprechend einer digitalen 1 bzw. 0 bei einer Bi-Phase-Kodierung, jeweils wiederum am Randbereich mit einem Burst-Signal überlagert ist entsprechend den obigen Ausführungen bei einem digitalen "0"-Signal (A, $\bar{A}$). Das hochfrequente Burst-Signal weist wiederum einen Phasensprung hier an der Stelle $t_4$ auf.

Im Basisband erfolgt also eine Kodierung einer digitalen 0 bzw. einer digitalen 1 entsprechend der Bi-Phase-Kodierung. In den Seitenbändern wird eine digitale 0 durch zwei Phasensprünge und eine digitale 1 durch lediglich einen Phasensprung kodiert.

Um aus den Signalen A, B bzw. $\bar{A}$, $\bar{B}$ durch die Modulation durch den Modulator 3 ein Signal mit der Charakteristik gemäß der spektralen Darstellung in Figur 3 zu erhalten, muß folgendes Kriterium erfüllt werden:

Da das Signal A quasi punktsymmetrisch ist, kann auf das Signal A wiederum ein Signal A oder B folgen. Da das Signal B achsensymmetrisch ausgebildet ist, muß auf das Signal B das invertierte Signal $\bar{A}$ bzw. das invertierte Signal $\bar{B}$ folgen. Auf das invertierte Signal $\bar{A}$ kann wiederum, da dieses ebenso punktsymmetrisch aufgebildet ist, das Signal $\bar{A}$ bzw. das Signal $\bar{B}$ folgen. Da durch die Invertierung des Signals B das Signal $\bar{B}$ ebenso achsensymmetrisch bleibt, muß auf das Signal $\bar{B}$ wiederum ein dazu invertiertes Signal, also entweder das Signal A oder das Signal B folgen. Auf diese Weise wird verhindert, daß ein zusätzlicher Phasensprung zwischen zwei aufeinanderfolgenden Bitwerten entsteht und eine korrekte Dekodierung auf der Empfängerseite erfolgen kann. Diese Vorgehensweise entspricht im wesentlichen der bei einer Bi-Phase-Kodierung.

Figur 3 zeigt hierzu die entsprechende spektrale Verteilung eines erfindungsgemäß modulierten Signals. Dabei ist mit T die Trägerfrequenz im Basisband und mit SR der Hilfsträger für das obere Seitenband und mit SL der Hilfsträger für das untere Seitenband dargestellt.

Figur 4 zeigt eine mögliche Ausgestaltung eines Empfängers im Schloß.

Mit 6 ist eine Eingangsklemme bezeichnet, der das empfangene Signal zugeführt wird. Dieses wird parallel durch zwei Einheiten ausgewertet. Die erste Einheit besteht aus einem Bandpaß 9 sowie einem nachgeschalteten Komparator 11 und einem nachgeschalteten Dekodierer 13. Die zweite Einheit besteht z.B. aus einem Synchrondemodulator 7, dem ein Hilfsträger 16 zugeführt wird, sowie einem Bandpaß 8, einem nachgeschalteten Komparator 10 und einem Dekodierer 12. Die Ausgänge der Dekodierer 12 und 13 werden den Umschaltkontakten eines Umschalters 14 zugeführt, dessen Mittelkontakt mit einer Ausgangsklemme 15 verschaltet ist.

Der Demodulator 7 in der zweiten Einheit könnte auch zwischen dem Komparator 10 und dem Dekoder 12 geschaltet werden. Dann müßte jedoch der Bandpaß 8 entsprechend in seiner Frequenz an das obere bzw. untere Seitenband angepaßt werden.

Die Auswertung erfolgt demnach für das Basisband durch die Einheiten 9, 11, 13 und für die Seitenbänder durch die Einheiten 7, 8, 10, 12. Eine weitere nicht dargestellte Einheit wertet beide empfangenen Signale aus und prüft, beispielsweise durch einen Redundanz-Check, welcher "Kanal" sinnvolle Daten liefert. Liefert ein Kanal nicht sinnvolle Daten, ist er also gestört, so wird der Umschalter 14 entsprechend angesteuert, so daß der Ausgang 15 auf den sinnvolle. Daten liefernden Kanal umgeschaltet wird.

**Patentansprüche**

1. Elektronisches berührungsloses Datenübertragungssystem, insbesonder Schlüssel-Schloß-System für eine KFZ-Wegfahrsperre, mit einer induktiven Kopplung zur gemeinsamen Daten- und Energieübertragung,
   **dadurch gekennzeichnet**, daß die Datenübertragung vom Schlüssel zum Schloß über ein Basisband und wenigstens ein redundante Informationen enthaltendes Seitenband erfolgt.

2. Elektronisches berührungsloses Datenübertragungssystem nach Anspruch 1,
   **dadurch gekennzeichnet**, daß ein Modulator vorgesehen ist, und daß die zu übertragenden Informationen derart digital kodiert werden, daß durch die Modulation mit einer Trägerfrequenz ein Übertragungssignal mit einem Basisband und einem oberen und unteren Seitenband entsteht.

3. Elektronisches berührungsloses Datenübertragungssystem nach einem der vorhergehenden Ansprüche,
   **dadurch gekennzeichnet**, daß die zu übertragenden digitalen Signale im Bi-Phase-Code-Verfahren kodiert werden und zusätzliche Burst-Signale an den Null-Eins-Übergängen und Eins-Null-Übergängen zur Erzeugung der Seitenbänder eingefügt sind.

4.  Elektronisches berührungsloses Datenübertragungssystem nach Anspruch 3,
    **dadurch gekennzeichnet**, daß die an den Null-Eins-Übergängen eingefügten Burst-Signale gegenüber den zu den Eins-Null-Übergängen eingefügten Burst-Signalen in der Phasenlage invertiert sind.

5.  Elektronisches berührungsloses Datenübertragungssystem nach Anspruch 3 oder 4,
    **dadurch gekennzeichnet**, daß einer digitalen 0 eine erste punktsymmetrische bzw. eine invertierte punktsymmetrische Signalform $(A, \overline{A})$ zugeordnet wird und einer digitalen 1 eine achsymmetrische bzw. eine dazu invertierte achsymmetrische Signalform $(B, \overline{B})$ zugeordnet wird und zur Übertragung einer digitalen Bitfolge bei Aussendung einer digitalen 1 für das folgende Bit jeweils die zur zuvor gesendeten Signalform invertierte Signalform ausgesendet wird.

6.  Elektronisches berührungsloses Datenübertragungssystem nach einem der vorhergehenden Ansprüche,
    **dadurch gekennzeichnet**, daß das Schloß-System das empfangene Signal parallel im Basisband und im Seitenband auswertet.

7.  Elektronisches berührungsloses Datenübertragungssystem nach Anspruch 6,
    **dadurch gekennzeichnet**, daß die Ausgänge der parallel arbeitenden Einheiten über einen Umschalter mit einer Ausgangsklemme verbunden sind und daß der Umschalter jeweils auf die Einheit geschaltet wird, welche durch einen Redundanztest als sinnvoll erkannte Daten auswertet.

EP 0 688 927 A2

**FIG 1**

**FIG 2**

**FIG 3**

SL          T          SR

**FIG 4**

5